**Europäisches Patentamt**

**European Patent Office**

**Office européen des brevets**

(19)

(11) Veröffentlichungsnummer: **0 051 201**

**A1**

# EUROPÄISCHE PATENTANMELDUNG

(12)

(21) Anmeldenummer: **81108528.1**

(22) Anmeldetag: **20.10.81**

(51) Int. Cl.³: **F 16 L 37/22**
**F 16 L 37/28**

(30) Priorität: **03.11.80 DE 3041305**

(43) Veröffentlichungstag der Anmeldung:
**12.05.82 Patentblatt 82/19**

(84) Benannte Vertragsstaaten:
**FR GB IT SE**

(71) Anmelder: **Aeroquip AG**
**Baarerstrasse 10**
**CH-6300 Zug(CH)**

(72) Erfinder: **Steuerwald, Alfred**
**Kirchheimbolander Strasse 4**
**CH-6719 Orbis(CH)**

(74) Vertreter: **Patentanwälte Dipl.-Ing. Rudolf Bibrach**
**Dipl.-Ing. Elmar Rehberg**
**Postfach 7 38**
**D-3400 Göttingen(DE)**

(54) **Kupplung für Hydrauliksysteme.**

(57) Eine Kupplung für Hydrauliksysteme besitzt eine Kupplungsmuffe und einen Kupplungsstecker, die mit je einem durch eine Schließfeder in Schließstellung belasteten und in einem zentrisch gelagerten Sternkörper geführten Ventilkörper ausgestattet sind. Kupplungsmuffe (2) und Kupplungsstecker (1) sind ineinander steckbar und in der gekuppelten Stellung über ein Kugelgesperre verregelbar. Die Kupplungsmuffe (2) besitzt einen äußeren Gehäusekörper (16) und einen darin verschiebbar und abgedichtet gelagerten, von einer Feder (33) in Mittellage beaufschlagten Innenkörper (21).

Zwischen Gehäusekörper (16) und Innenkörper (21) ist eine mit dem Hydraulikmedium in der Kupplungsmuffe (2) in Verbindung stehende abgedichtete Ausgleichskammer (44) vorgesehen.

Zur Druckentlastung des Innenkörpers (21) ist die Kreisringfläche (45) der Ausgleichskammer (44) innerhalb einhaltbarer Fertigungstoleranzen gleich groß wie die vom Druck in der Kupplungsmuffe (2) beaufschlagte und vom Durchmesser der Dichtung (42) zwischen Gehäusekörper (16) und Innenkörper (21) festgelegte Kreisfläche (43) ausgebildet.

Fig. 1

EP 0 051 201 A1

Kupplung für Hydrauliksysteme

Die Erfindung bezieht sich auf eine aus einer Kupplungsmuffe und einem Kupplungsstecker gebildete Kupplung für
Hydrauliksysteme, die mit je einem durch eine Schließfeder
in Schließrichtung belasteten und in einem zentrisch gelagerten Sternkörper geführten Ventilkörper ausgestattet
ineinander steckbar und in der gekuppelten Stellung über
ein Kugelgesperre verriegelbar sind, wobei die Kupplungsmuffe einen äußeren Gehäusekörper und einen darin verschiebbar und abgedichtet gelagerten, von einer Feder in
Mittellage beaufschlagten Innenkörper aufweist und zwischen
Gehäusekörper und Innenkörper eine mit dem Hydraulikmedium
in der Kupplungsmuffe in Verbindung stehende abgedichtete
Ausgleichkammer besitzt.

Eine derartige Kupplung ist aus der DE-OS 28 53 962 bekannt.
Da die Kupplung von Hand ein- und ausgekuppelt werden muß,
ist die Kraft der den Innenkörper relativ zum Gehäusekörper
in eine Mittellage lastenden Feder grundsätzlich begrenzt,
da diese manuell überwunden werden muß. Andererseits ist
diese Kupplung selbsttätig durch den hydraulischen Druck
entkuppelbar, wenn der Druck eine vorbestimmte Grenze überschreitet. Diese Grenze wird durch die Feder in Verbindung
mit den geometrischen Abmessungen der Teile der Kupplungsmuffe festgelegt. Die Kupplung besitzt somit eine gewisse
Sicherheitsfunktion, d.h. bei Überschreiten eines gewissen
Druckes und damit der Kraft der Feder verschiebt sich der
Innenkörper in einer solchen Richtung, daß das Kugelgesperre
selbsttätig gelöst wird. Der Kupplungsstecker fliegt dann
aus der Kupplungsmuffe heraus und beide Ventilkörper begeben
sich in Schließstellung. Diese Sicherheitsfunktion bedeutet aber andererseits, daß die Kupplung oberhalb des beschriebenen Druckes nicht einsetzbar ist. Damit ist diese Kupplung infolge der Begrenztheit der manuell überwindbaren Kraft der Feder nur im Niederdruckbereich einsetzbar. Der Innenkörper ist in dem Gehäusekörper der Kupplungsmuffe verschiebbar gelagert und mit Hilfe einer Dichtung angedichtet. Diese Dichtung bildet in Verbindung mit der inneren Durchgangsbohrung durch den Innenkörper eine Ringaussparung, die vom Druck des Hydraulikmediums in der Kupplungsmuffe beaufschlagt ist, und zwar so, daß über die gebildete Kreisringfläche der Innenkörper mit einer Kraft beaufschlagt wird, die bestrebt ist, den Innenkörper aus dem Gehäusekörper der Kupplungsmuffe herauszutreiben. Zwischen Innenkörper und Gehäusekörper der Kupplungsmuffe ist darüber hinaus eine Ausgleichskammer gebildet und mit entsprechenden Dichtungen abgedichtet, die zu der inneren Durchgangsbohrung der Kupplungsmuffe und damit auch zu der Ringaussparung in dauernder Verbindung steht. Die Volumina der Ringaussparung einerseits und der Ausgleichskammer andererseits sind ähnlich bemessen. Diese beiden, jeweils Kreisringflächen aufweisenden Kammern sind so angeordnet, daß sich die entsprechenden Volumina des Hydraulikmediums bei einer Bewegung des Innenkörpers relativ zum Gehäusekörper jeweils verschieben können. Dies bedeutet nichts anderes, als daß der Innenkörper teilweise druckentlastet ausgebildet ist. Nicht berücksichtigt ist dabei die Kreisfläche, die von der inneren Durchgangsbohrung des Innenkörpers aufgespannt wird. Diese Kupplung ist beispielsweise dann nicht mehr kuppelbar, wenn ein der Kupplungsmuffe vorgeschaltetes Steuerventil in eine geschlossene Abschlußstellung überführt ist, also das Volumen mit dem Hydraulikmedium der gefüllten Kupplungsmuffe abgeschlossen ist. Ein Kuppeln, also das Einführen des Kupplungssteckers in die Kupplungsmuffe in diesem Zustand, könnte nur dadurch erfolgen, daß eine entsprechende Volumenkompression der Hydraulikflüssigkeit erfolgt, was zumindest auf manuellem Wege
ausgeschlossen ist. Die bekannte Kupplung kann auch dann
nicht gekuppelt werden, wenn steckerseitig hydraulischer
Druck eingeschlossen ist, weil der Ventilkörper der Kupplungsmuffe offensichtlich nur den einfachen Ventilhub
ausführen kann.

Eine weitere Rohrleitungskupplung ist aus der
DE-AS 27 24 630 bekannt. Hierbei besitzt jedoch nur die
Kupplungsmuffe einen Ventilkörper. Es ist hier bereits
das Problem erkannt worden, daß die Feder zwischen
Gehäusekörper und Innenkörper der Kupplungsmuffe nur so
stark ausgelegt werden kann, daß sie noch manuell zum
Kuppeln bzw. Entkuppeln betätigbar ist. Andererseits ist
bei dieser Konstruktion der Innenkörper nicht druckentlastet ausgebildet, so daß auch diese Kupplung die zuvor
beschriebene Sicherheitsfunktion aufweist, bzw. sich bei
einem bestimmten hydraulischen Druck selbsttätig entkuppelt,
also ebenfalls nur im Niederdruckbereich anwendbar ist. Um
diesem Nachteil zumindest teilweise entgegen zu wirken, ist
zwischen Gehäusekörper und verschiebbarem Innenkörper ein
zweites Kugelgesperre angeordnet, welches dynamisch von dem
durch die gekuppelte Kupplung hindurchfließenden Hydraulikmedium betätigbar ist. Dieses zweite Kugelgesperre soll dynamisch leichter ansprechbar ausgebildet sein als die Feder
zur Beaufschlagung der Mittellage des Innenkörpers, wodurch
bei entsprechendem Druckmitteldurchfluß durch die Kupplung
infolge in das Strömungsmedium vorkragender Elemente auf
dynamischem Wege eine Betätigung und damit eine Verriegelung
des zweiten Kugelgesperres zwischen dem Gehäusekörper und
dem Innenkörper erfolgen soll. Es ist somit klar, daß diese
Kupplung sich immer dann selbsttätig hydraulisch trennen wird,
wenn bei geringer dynamischer Bewegung dieses Hydraulikmediums
relativ große statische Drücke entstehen, wie dies beispiels-

- 4 -

weise beim Stillsetzen eines Arbeitseerkzeuges an einem
Hindernis o. dgl. zwangsläufig eintritt.

Die beiden bisher beschriebenen Kupplungen sind jedoch
insofern vorteilhaft ausgebildet, als der Ventilkörper
bzw. die Ventilkörper in einem zentrisch gelagerten Sternkörper geführt sind, so daß es möglich ist, das Ruckmedium
mehr oder weniger zentral durch die Innenbohrung des Innenkörpers und an den Rippen des Sternkörpers vorbei durch
die Kupplung zu leiten, wodurch die Druckverluste innerhalb
der Kupplung relativ klein sind.

Die US-PS 3 791 411 zeigt ebenfalls eine Kupplung aus
Kupplungsmuffe und Kupplungsstecker, bei der jedoch der Ventilkörper der Kupplungsmuffe bereits um den doppelten Hub
verschiebbar ist, so daß diese Kupplung auch unter Druck im
Kupplungsstecker kuppelbar ist. Auch hier besitzt die Kupplungsmuffe im Gehäusekörper einen verschiebbaren Innenkörper, der dann vollkommen druckentlastet ausgebildet ist, wenn
seine beiden Dichtungen aus gleichem Durchmesser angeordnet
werden. Voraussetzung für diese Druckentlastung ist aber,
daß das Hydraulikmedium nicht durch eine innen durchgehende
Längsbohrung, sondern außen herum unter Benutzung entsprechender
Kanäle herumgeführt und dabei dem Innenkörper zwischen den
beiden Dichtungen zugeleitet wird. Es versteht sich, daß damit
nicht nur die Herstellung der Kupplung entsprechend kompliziert
und aufwendig wird, sondern daß auch Druckverluste infolge
der mehrfachen Umlenkung der Strömung innerhalb der Kupplung
beim Durchströmen auftreten. Andererseits besitzt aber diese
Kupplung den Vorteil der druckentlasteten Lagerung des Innenkörpers, so daß diese Kupplung auch in mehreren besonderen
Betriebsbedingungen kuppelbar bzw. verwendbar ist. Insbesondere läßt sich der Kupplungsstecker auch dann in die Kupplungsmuffe einkuppeln, wenn die Kupplungsmuffe unter einem abgeschlossenem Medienvolumen und/oder einem entsprechenden
Hydraulikdruck steht.

Der Erfindung liegt die Aufgabe zugrunde, eine Kupplung
der eingangs beschriebenen Art so weiterzubilden, daß
einerseits die für geringen Druckverlust sinnvolle Innendurchströmung der Kupplungsmuffe beibehalten bleibt und
andererseits trotzdem der Innenkörper vollständig bzw.
zumindest innerhalb der einhaltbaren Fertigungstoleranzen
etwa vollständig druckentlastet ist. Die Kupplung soll
ohne Volumenkompression eines etwa eingeschlossenen Mediums
in der Kupplungsmuffe kuppelbar sein, also beispielsweise
auch dann, wenn das üblicherweise vorgeschaltete Steuerventil sich in neutraler, also geschlossener Stellung befindet.

Erfindungsgemäß wird dies dadurch erreicht, daß die Kreisringfläche der Ausgleichskammer zwecks Druckentlastung des
Innenkörpers innerhalb einhaltbarer Fertigungstoleranzen
gleich groß wie die vom Druck in der Kupplungsmuffe beaufschlagte und vom Durchmesser der Dichtung zwischen Gehäusekörper und Innenkörper festgelegte Kreisfläche ausgebildet
ist. Die Erfindung zeigt damit eine Kupplung mit Innendurchströmung und vollständiger Druckentlastung des Innenkörpers.
Gleichzeitig wird überraschenderweise die Kupplung auch für
Hoch- und Höchstdrücke anwendbar, weil auch beim Erreichen
solcher Drücke das Kugelgesperre nicht vom Hydraulikmedium
betätigt wird. Die Kupplung ist ohne weiteres auch dann kuppel
bar, wenn der Kupplungsstecker unter Druck steht. Hierzu ist
es lediglich erforderlich, dem Ventilkörper der Kupplungsmuffe den doppelten Ventilkörperhub zuzuordnen. Ein weiterer
wesentlicher Vorteil der erfindungsgemäßen Kupplung besteht
darin, daß die druckentlastete Bauart im Vergleich zum Stand
der Technik wesentlich einfacher ist und somit auch geringere
Herstellungskosten verursacht.

Der Gehäusekörper kann einen Einsatzkörper aufweisen, zwischen dem und dem Innenkörper die Ausgleichskammer angeordnet sein kann. Hierdurch entsteht der Vorteil, daß die Kupplung selbst mit kleinem Außendurchmesser - bezogen auf die innere Durchgangsbohrung - also die Nennweite ausgebildet werden kann. Mit besonderem Vorteil ist die Ausgleichskammer axial versetzt zu dem Ventilkörper der Kupplungsmuffe angeordnet, so daß die Ausgleichskammer selbst auf relativ kleinem Durchmesser untergebracht werden kann. Andererseits wird damit aber auch nicht die Strömung um den Ventilkörper der Kupplungsmuffe herum zu sehr eingeschränkt, was wiederum zu einem entsprechenden Druckverlust führen würde. Somit ist es auch möglich, daß die eine Dichtung der Ausgleichskammer auf einem Durchmesser kleiner oder gleich dem die Kreisfläche festlegenden Durchmesser angeordnet ist.

Die wesentlichen Vorteile des erfindungsgemäßen Gegenstandes sind zunächst darin zu sehen, daß unter Beibehaltung der Innendurchströmung die Kupplung einen relativ kleinen Druckverlust bei Durchströmung aufweist. Sofern der Ventilkörper der Kupplungsmuffe den doppelten Hub aufweist, ist die Kupplung auch unter Druck auf der Steckerseite kuppelbar. Durch die völlige Druckentlastung des Innenkörpers kann eine Verschiebung dieses Innenkörpers ohne Volumenkompression durchgeführt werden. Weiterhin tritt keine automatische Trennung der Kupplungsteile bei Druckanstieg auf, so daß die Kupplung auch für Hoch- und Höchstdrücke anwendbar wird. Die Kupplung ist selbst dann betätigbar, wenn beispielsweise ein vorgeschaltetes Steuerventil in der neutralen geschlossenen Stellung oder auch auf Rücklauf geschaltet ist. Die Kupplung läßt sich leicht herstellen und erlaubt eine Bauweise auf relativ kleinem Außendurchmesser bezogen auf den Nenndurchmesser. Schließlich kann die Kraft der Feder, die den Innenkörper in eine Mittellage hineinbeaufschlagt, unabhängig von dem zulässigen und bestimmungsgemäßen Druckbereich, so
schwach gewählt werden, daß sich die Kupplung mühelos betätigen läßt.

Die Erfindung wird anhand eines bevorzugten Ausführungsbeispiels weiter erläutert und beschrieben. Es zeigen:

Fig. 1    einen Halbschnitt während des Kupplungs-
          vorgangs bei noch geschlossenem Kugel-
          gesperre,

Fig. 2    einen Halbschnitt durch die Kupplung nach
          Verschiebung des Innenkörpers und Entriegelung des Kugelgesperres,

Fig. 3    einen Halbschnitt durch die Kupplung nach
          Erreichen der gemeinsamen Stirnmittel-
          ebene zwischen Kupplungsstecker und Innen-
          körper sowie verriegeltem Kugelgesperre
                    und

Fig. 4    einen Halbschnitt durch die Kupplung in
          verriegeltem Zustand nach dem Öffnen des
          Ventilkörpers des Kupplungssteckers.

Die Kupplung besteht aus dem Kupplungsstecker 1 und der
Kupplungsmuffe 2. Der Kupplungsstecker 1 besitzt einen
Kupplungskörper 3 mit einem Sitz 4. Im Kupplungskörper
3 ist ein Sternkörper 5, der über den Umfang verteilt
drei abstehende Arme 6 aufweist, mit Hilfe eines
Sicherungsrings 7 gelagert. Ansonsten ist der Sternkörper 5 hülsenförmig ausgebildet und besitzt mittig
eine Durchbohrung 8, in der ein Schaft 9 eines Ventilkörpers 10 verschiebbar geführt ist. Der Ventilkörper
10 bildet mit dem Sitz 4 des Kupplungskörpers 3 ein
Rückschlagventil 10, 4, welches die betreffende
Leitung, die mit dem Kupplungsstecker 1 verbunden
ist, wie ersichtlich, abschließt. Der Ventilkörper 10
wird gegen den Sitz 4 mit Hilfe der Schließfeder 11
gedrückt, die andererseits den Sternkörper 5 an dem
Sicherungsring 7 in Anlage hält. Der Ventilkörper 10
ragt in geschlossener Stellung über die Stirnwand 12
des Kupplungssteckers 1 um ein dem einfachen Ventilkörperhub entsprechendes Maß hinaus. In der Durchbohrung 8 ist weiterhin mit Hilfe eines Gewindes eine
Einstellschraube 13 gelagert, deren vorderes Ende
einen Anschlag 14 für das Ende des Schaftes 9 bzw.
den Ventilkörper 10 bildet. Die Einstellschraube 13
wird im Sternkörper 5 mit Hilfe des Gewindes so eingestellt, daß sich der Anschlag 14 in einer Entfernung,
die dem einfachen Ventilkörperhub entspricht, vom
Ende des Schaftes 9 des Ventilkörpers 10 befindet.
Der Ventilkörper 10 kann also zwischen seiner Offenstellung und seiner Schließstellung den einfachen
Ventilhub zurücklegen.

Der Kupplungskörper 3 besitzt an der dargestellten
Stelle eine umlaufende Verriegelungsnut 15, die mit
einem noch später zu beschreibenden Kugelgesperre
zur Verriegelung des Kupplungssteckers 1 mit der
Kupplungsmuffe 2 in der gekuppelten Stellung und zur
Freigabe der beiden Teile 1, 2 in der entkuppelten
Stellung zusammenwirkt.

Die Kupplungsmuffe 2 besitzt einen äußeren Gehäusekörper 16, der mit seinem Anschlußgewinde 17 an
einem Rohr oder einem anderen festen Maschinenteil
angeschraubt sein kann. Der äußere Gehäusekörper 16
besteht aus Fertigungs- und Montagegründen zweckmäßig aus den beiden Teilen 18 und 19, die über ein
Gewinde 20 miteinander verbunden sind. In dem äußeren
Gehäusekörper 16 ist ein Innenkörper 21, der aus den
Teilen 22 und 23 bestehen kann, axial gleitend und
verschiebbar gelagert. An diesem verschiebbaren
Innenkörper 21 ist innen ein Sternkörper 24, der
ebenfalls drei radial abstehende Arme 25 besitzt,
mit Hilfe eines Sicherungsrings 26 gelagert. Der Sternkörper 24 ist hülsenförmig ausgebildet und besitzt
eine Durchbohrung 27, die einen Schaft 28 eines Ventilkörpers 28 aufnimmt, der im übrigen über eine Schließfeder 30 an dem Sternkörper 24 bzw. dessen Armen 25
abgestützt ist. Um die Kupplung auch dann kuppeln zu
können, wenn der Kupplungsstecker 1 unter Druck steht,
ist die Geometrie und die Ausbildung der Ventilkörperlagerung der Kupplungsmuffe 2 so ausgebildet, daß der
Ventilkörper 29 zwischen seiner Schließstellung und
seiner Öffnungsstellung mindestens den doppelten Ventilkörperhub zurücklegen kann. Ein Sitz 31 an dem Innenkörper 21 bildet mit dem Ventilkörper 29 ein Rückschlagventil 29 mit seiner Spitze über die Stirnwand
32 des Innenkörpers 21 um den einfachen Ventilhub über.

Der Innenkörper ist gegenüber dem äußeren Gehäusekörper 16 über eine Feder 33 in eine Mittellage
hineinbeaufschlagt, dem eine solche Stellung zugeordnet ist, daß das Kugelgesperre verriegelt ist. Das Kugelgesperre weist über den Umfang verteilt zunächst Bohrungen 34 in dem Innenkörper 21 auf, in denen jeweils eine Kugel 35 gelagert bzw. vorgesehen ist. Den Kugeln 35 ist an dem Teil 19 des äußeren Gehäusekörpers 16 ein umlaufender Verriegelungsnocken 36 zugeordnet, an den anschließend rechts und links Ausweichnuten 37 und 38 vorgesehen bzw. angeordnet sind, in welche die Kugeln 35 bei entsprechender Relativbewegung teilweise eintreten und damit den Kupplungsstecker 1 bzw. dessen Verriegelungsnut 15 freigeben können. Die Teile 15 und 34 bis 38 bilden das Kugelgesperre 15, 34 - 38. Der Innenkörper 21 besitzt eine Dichtung 39 zur Abdichtung des Kupplungssteckers 1 in der gekuppelten Stellung.

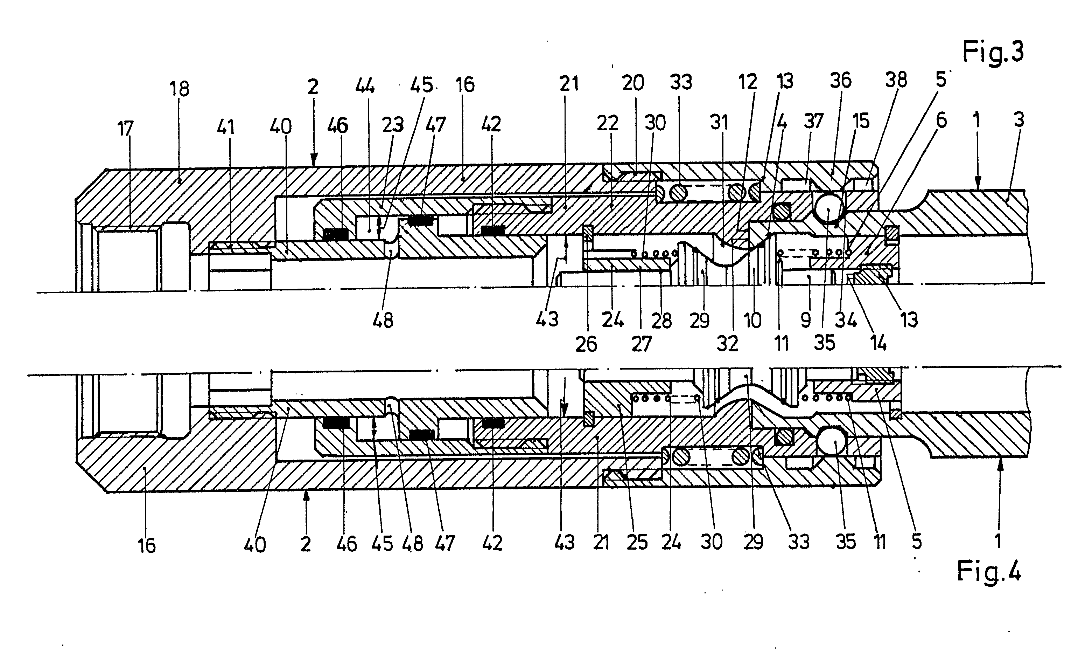

Mit dem äußeren Gehäusekörper 16 bzw. dessen Teil 18 ist ein Einsatzkörper 40 über ein Gewinde 41 dichtend verschraubt. Über eine Dichtung 42 ist der Innenkörper 21 gegenüber dem Einsatzkörper 40 abgedichtet gelagert. Diese Dichtung 42 bestimmt mit ihrem Durchmesser eine Kreisfläche 43, die für den inneren Durchgang der Kupplung maßgebend ist. In gekuppelter Stellung zwischen Kupplungsstecker 1 und Kupplungsmuffe 2 und bei geöffneten Ventilkörpern 10, 29 gemäß Fig. 4 wirkt vor dem Hydraulikmedium auf den Innenkörper 21 eine Kraft ein, die sich aus dem Produkt des herrschenden Druckes des Hydraulikmediums und der Kreisfläche 43 ergibt. Diese Kraft ist nach rechts gerichtet und versucht den Innenkörper 21 aus dem äußeren Gehäusekörper 16 herauszutreiben. Dabei ist für die Mittellage zwischen äußerem Gehäusekörper 16 und Innenkörper 21 die Kraft der Feder 33 vernachlässigt. Die Kraft, die den Innenkörper 21 in der beschriebenen Richtung belasten kann, kann sehr hoch werden, beispielsweise dann, wenn ein an dem Kupplungsstecker 1 angeschlossenes Arbeitswerkzeug auf ein Hindernis aufläuft, also beispielsweise kein Hydraulikmedium mehr in den Rücklauf gelangen kann. Um den Innenkörper 21 druckentlastet in dem äußeren Gehäusekörper 16 zu lagern, ist eine Ausgleichskammer 44 zwischen dem Innenkörper 21 und dem Einsatzkörper 40 des äußeren Gehäusekörpers 16 gebildet. Die Ausgleichskammer 44 besitzt eine Kreisringfläche 45, die durch die Dichtungen 46 und 47 festgelegt wird und gleich groß bemessen ist - innerhalb einhaltbarer Fertigungstoleranzen - wie die Kreisfläche 43. Die Ausgleichskammer 44 steht über den Kanal 48 in dauernder Verbindung mit dem Hydraulikmedium in der Kupplungsmuffe 2, so daß entsprechend dem Produkt aus dem Druck des Kupplungsmediums und der Kreisringfläche 45 auf den Innenkörper 21 eine nach links, also entgegengesetzt gerichtete Kraft ausgeübt wird, die gleichgroß ist, wie die nach rechts gerichtete Kraft auf die Kreisfläche 43. Der Innenkörper 21 ist damit druckentlastet gelagert. Er kann selbst bei relativ schwach bemessener Feder 33 und Auftreten relativ hoher Drücke sicher in dem äußeren Gehäusekörper 16 festgehalten werden, so daß keine Gefahr besteht, daß die Kupplung bei Drücken, die die Kraft der Feder 33 übersteigt, hydraulisch selbsttätig entkuppelt. Die Kupplung kann selbst dann gekuppelt werden, beispielsweise auf der Seite des Kupplungssteckers 1 ein eingesperrter Druck vorhanden ist und wenn das in der Kupplungsmuffe 2 anstehende Hydraulikmedium sich beispielsweise infolge eines geschlossenen
Steuerventils ein abgeschlossenes Volumen beinhaltet.
Dies ist deshalb möglich, weil der Innenkörper 21
ohne Volumenkompression verschiebbar ist. Selbstverständlich läßt sich die Kupplung auch dann kuppeln,
wenn das Steuerventil auf Rücklauf geschaltet ist.

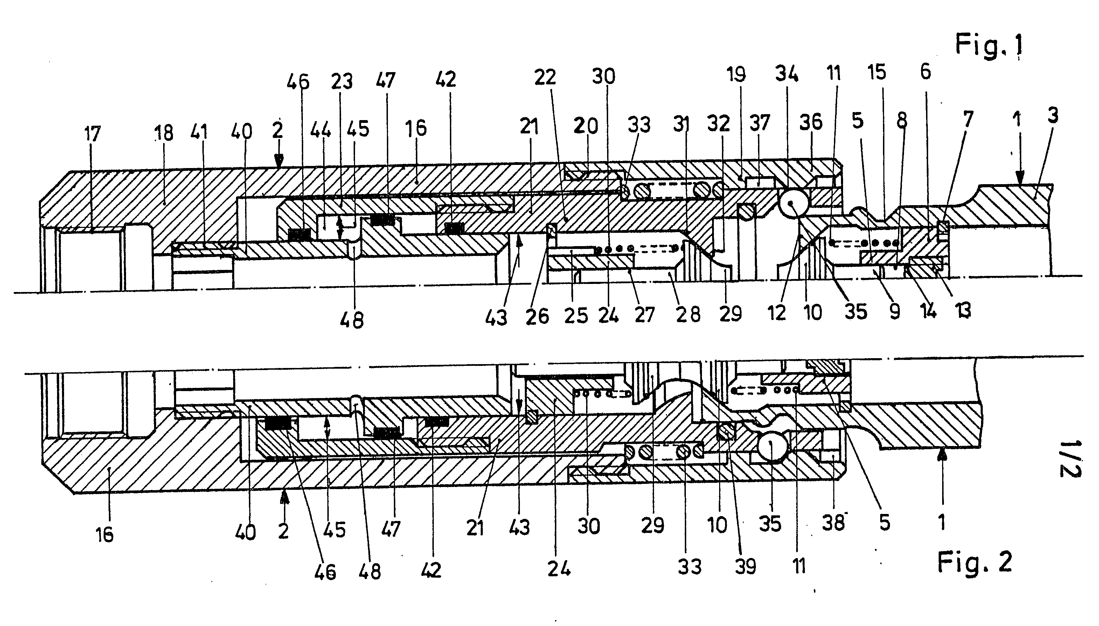

Verschiedene Stadien des Kupplungsvorganges sind in
den Fig. 1 bis 4 dargestellt. Gemäß Fig. 1 und unter
der Wirkung der Feder 33 befindet sich der Innenkörper
21 in Mittellage zum äußeren Gehäusekörper 16, so daß
beim Einstecken des Kupplungssteckers 1 dieser zunächst mit dem vorderen Teil seines Kupplungskörpers 3
an den Kugeln 35 des geschlossenen Kugelgesperres vorbeigeführt wird, wonach eine der Verriegelungsnut 15 benachbarte Aufwölbung an den Kugeln 35 anschlägt. Durch weiteres
Drücken wird der Innenkörper 21 relativ zum äußeren
Gehäusekörper 16 nach links verschoben, so daß die
Kugeln 35 in den Bereich der Ausweichnut 37 gelangen
können und in diese ausweichen, so daß der Kupplungsstecker 1 mit seinem Kupplungskörper 13 weiter in die
Kupplungsmuffe 2 eingeführt werden kann. Dabei gelangen
auch die beiden Ventilkörper 10, 29 in gegenseitige Anlage, wodurch bei durch eingesperrten Restdruck in dem
Kupplungsstecker 1 geschlossen gehaltenen Ventilkörper
10 der Ventilkörper 29 zunächst um den einfachen Hub
geschoben wird. Die Teile nehmen dann eine Relativlage
ein, wie sie etwa in Fig. 2 dargestellt ist. Es wird
schließlich die Anlage der Stirnfläche 12 des Kupplungssteckers 1 an der Stirnfläche 32 der Kupplungsmuffe
erreicht, wie dies Fig. 3 zeigt. Dabei hat der Ventilkörper 29 des doppelten Ventilkörperhub zurückgelegt.

Während dieser Bewegung geht das Kugelgesperre in die
verriegelte Stellung, in der die Kugeln 35 in die
Verriegelungsnut 15 des Steckerventils 1 eingreifen.
Gleichzeitig verschiebt die Feder 33 den Innenkörper
21 mit dem verriegelten Kupplungskörper 3 des Kupplungssteckers 1 wieder in die Mittellage. Damit ist die
Stellung der Teile gemäß Fig. 3 erreicht. Durch Einschalten einer Druckquelle, die auf der Seite der
Kupplungsmuffe 2 angeordnet ist, wird über das
Hydraulikmedium ein Druck erzeugt, der nun auch auf
den Ventilkörper 10 einwirkt, so daß das Rückschlagventil 10, 4 geöffnet wird. Dabei wird der Ventilkörper 10 nach rechts um den einfachen Ventilkörperhub  verschoben, indem der Schaft 9 an dem Anschlag
14 zur Anlage kommt. Es versteht sich, daß die Kraft
der Schließfeder 30 größer ausgebildet ist als die
Kraft der Schließfeder 11. Damit wird die vollständig
gekuppelte Stellung gemäß Fig. 4 erreicht. Es ist
ersichtlich, daß die Kupplung einen inneren Durchgang
für das Hydraulikmedium aufweist, so daß der Druckverlust relativ klein ist. Andererseits ist aber auch
in dieser Stellung der Innenkörper 21 druckentlastet
gelagert.

# BIBRACH & REHBERG
## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35

TELEX: 96616 bipat d

POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

| IHR ZEICHEN<br>YOUR REF.<br>VOTRE REF. | IHR SCHREIBEN VOM<br>YOUR LETTER<br>VOTRE LETTRE | UNSER ZEICHEN<br>OUR REF.<br>NOTRE REF.<br>**10.681a/AS5** | D-3400 GÖTTINGEN,<br>PÜTTERWEG 6<br>**15.09.1981** |
|---|---|---|---|

Aeroquip AG, CH-6300 Zug, Baarerstr. 10

Kupplung für Hydrauliksysteme

## Patentansprüche:

1. Aus einer Kupplungsmuffe und einem Kupplungsstecker gebildete Kupplung für Hydrauliksysteme, die mit je einem durch eine Schließfeder in Schließstellung belasteten und in einem zentrisch gelagerten Sternkörper geführten Ventilkörper ausgestattet ineinander steckbar und in der gekuppelten Stellung über ein Kugelgesperre verriegelbar sind, wobei die Kupplungsmuffe einen äußeren Gehäusekörper und einen darin verschiebbar und abgedichtet gelagerten, von einer Feder in Mittellage beaufschlagten Innenkörper aufweist und zwischen Gehäusekörper und Innenkörper eine mit dem Hydraulikmedium in der Kupplungsmuffe in Verbindung stehende, abgedichtete Ausgleichskammer besitzt, dadurch gekennzeichnet, daß die Kreisringfläche (45) der
Ausgleichskammer (44) zwecks Druckentlastung des
Innenkörpers (21) innerhalb einhaltbarer Fertigungstoleranzen gleich groß wie die vom Druck in der
Kupplungsmuffe (2) beaufschlagte und vom Durchmesser der Dichtung (42) zwischen Gehäusekörper
(16), (40) und Innenkörper (21) festgelegte Kreisfläche (43) ausgebildet ist.

2. Kupplung nach Anspruch 1, dadurch gekennzeichnet,
daß der Gehäusekörper (16) einen Einsatzkörper (40)
aufweist, zwischen dem und dem Innenkörper (21) die
Ausgleichskammer (44) angeordnet ist.

3. Kupplung nach Anspruch 1 und 2, dadurch gekennzeichnet, daß die Ausgleichskammer (44) axial versetzt zu
dem Ventilkörper (29) der Kupplungsmuffe (2) angeordnet ist.

4. Kupplung nach Anspruch 1 bis 3, dadurch gekennzeichnet, daß die eine Dichtung (46) der Ausgleichskammer
(44) auf einem Durchmesser kleiner oder gleich dem
die Kreisfläche (43) festlegenden Durchmesser angeordnet ist.

Fig. 1

Fig. 2

1/2

0051201

0051201

2/2

Fig.3

Fig.4

0051201

**Europäisches Patentamt**    **EUROPÄISCHER RECHERCHENBERICHT**

Nummer der Anmeldung

EP 81 10 8528

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 1 957 879 (AEROQUIP A.G.) <br> * Seite 11, Zeile 11 - Seite 15, Zeile 16; Figuren 3-6 * | 1 |
| A | FR - A - 1 385 658 (AEROQUIP A.G.) <br> * Seite 4, rechte Spalte, Zeile 33 - Seite 5, rechte Spalte, Zeile 18; Figuren * | 1,2 |
| A | FR - A - 2 247 662 (F.P.T. INDUS-TRIES LTD.) <br> * Figuren 6,7 * <br> & DE - A - 2 447 530 | 1 |
| A | US - A - 3 348 575 (SIMAK) | |
| E | DE - A - 3 015 485 (WALTER) <br> * Seite 13, Zeile 1 - Seite 14, Zeile 8; Figuren * | 1,3 |

**KLASSIFIKATION DER ANMELDUNG (Int. Cl.³)**

F 16 L 37/22
        37/28

**RECHERCHIERTE SACHGEBIETE (Int. Cl.³)**

F 16 L

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-02-1982 | HUBEAU |

EPA form 1503.1 06.78